# EUROPEAN PATENT APPLICATION

(11) **EP 4 700 972 A1**
(43) Date of publication of application: **25.02.2026**
(21) Application number: 24792409.5
(22) Date of filing: 18.03.2024
(51) Int. Cl.: H01M 50/566, H01G 11/06, H01G 11/74, H01G 11/78, H01M 50/107, H01M 50/152, H01M 50/184, H01M 50/531, H01M 50/559

(54) **BATTERY**

(30) Priority: 19.04.2023 JP 2023068777
(71) Applicant: Panasonic Intellectual Property Management Co., Ltd., Kadoma-shi, Osaka 571-0057 (JP)
(72) Inventor: KAWAGUCHI, Takashi, Kadoma-shi, Osaka 571-0057 (JP); OKIMOTO, Ryota, Kadoma-shi, Osaka 571-0057 (JP)
(74) Representative: Eisenführ Speiser
(86) International application number: PCT/JP2024/010500
(87) International publication number: WO 2024/219133

(57) **Abstract**

A disclosed battery 10 includes an electrode group 30 including a first electrode and a second electrode, a case 20 housing the electrode group 30 and having a bottomed cylindrical shape with an opening at one end, a sealing body 50 sealing the opening, and a gasket 60 provided between an opening end portion 22 of the case 20 and the sealing body 50. The sealing body 50 includes a current collector plate 54 electrically connected to the first electrode, and a cap 51 with a disk shape overlaid on the outer side of the current collector plate 54 and welded to the current collector plate 54. The cap 51 includes a weld portion 52 welded to the current collector plate 54, and a thick portion 53 that is provided on the side toward the opening end portion 22 relative to the weld portion 52 and that is raised outward to be thicker than the weld portion 52. Thus, the occurrence of sputtering can be suppressed and scattering of sputter onto the gasket can be suppressed.

## Description

### [Technical Field]

The present disclosure relates to a battery.

### [Background Art]

Conventional batteries (e.g., see Patent Literature 1) are known that include a sealing body sealing an opening of a bottomed cylindrical case. The battery of Patent Literature 1 includes: an electrode group including a positive electrode and a negative electrode; a bottomed cylindrical case with an opening at one end that houses the electrode group; a sealing body sealing the opening of the case; and a gasket interposed between the opening end portion of the case and the sealing body, wherein the sealing body includes a current collector plate electrically connected to the positive electrode and a disk-shaped cap overlaid on the outer side of the current collector plate and welded to the current collector plate.

### [Citation List]

### [Patent Literature]

[Patent Literature 1] International Publication No. 2022/270432

### [Summary of Invention]

### [Technical Problem]

However, in the battery of Patent Literature 1, there is a possibility that a welding failure occurs due to the occurrence of sputtering in welding the current collector plate and the cap to each other. In addition, when the produced sputter scatters onto a gasket, the gasket may degrade. Under such circumstances, one of the objects of the present disclosure is to suppress the occurrence of sputtering while suppressing scattering of sputter onto the gasket.

### [Solution to Problem]

One aspect of the present disclosure relates to a battery. The battery includes an electrode group including a first electrode and a second electrode; a case housing the electrode group and having a bottomed cylindrical shape with an opening at one end; a sealing body sealing the opening; and a gasket provided between an opening end portion of the case and the sealing body, wherein the sealing body includes a current collector plate electrically connected to the first electrode, and a cap with a disk shape overlaid on an outer side of the current collector plate and welded to the current collector plate, and the cap includes a weld portion welded to the current collector plate, and a thick portion that is provided on a side toward the opening end portion relative to the weld portion and that is raised outward to be thicker than the weld portion.

### [Advantageous Effects of Invention]

According to the present disclosure, the occurrence of sputtering can be suppressed while suppressing scattering of sputter onto a gasket.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic cross-sectional view of an exemplary battery according to the present disclosure.
[FIG. 2] FIG. 2 is an enlarged cross-sectional view of main components of the battery of FIG. 1.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

A battery according to the present disclosure may be a primary battery such as a lithium primary battery or may be a secondary battery such as an alkaline storage battery (e.g., a nickelmetal hydride battery or a nickel-cadmium battery), a lithium-ion secondary battery, or a lithium-metal secondary battery. The term "battery" in the present disclosure encompasses power storage devices (e.g., a lithium-ion capacitor and an electric double-layer capacitor) in which at least one of a positive electrode and a negative electrode is a polarizable electrode that exhibits capacity by the non-Faraday reaction. The battery according to the present disclosure includes an electrode group, a case, a sealing body, and a gasket.

The electrode group includes a first electrode and a second electrode. For example, the electrode group may be a wound electrode group formed by winding the first electrode and the second electrode with a separator therebetween. The outer shape of the electrode group may be cylindrical or prismatic, for example. One of the first electrode and the second electrode is a positive electrode, while the other of the first electrode and the second electrode is a negative electrode.

The first electrode may include a band-shaped (or elongated sheet-shaped) first current collector and a first active material layer carried on the first current collector. The second electrode may include a band-shaped (or elongated sheet-shaped) second current collector and a second active material layer carried on the second current collector. The separator may be formed of a porous sheet having ionic permeability and insulating properties. Examples of the porous sheet include thin films having micropores, woven fabrics, and nonwoven fabrics.

When a lithium-ion secondary battery is used as an example, the first active material layer may be provided on both sides of the first current collector or may be provided on one side of the first current collector. When the first electrode is the positive electrode, the first current collector is a positive electrode current collector (which can be composed of an aluminum foil or an aluminum alloy foil), and the first active material layer is a positive electrode active material layer (which can contain a lithium-containing transition metal oxide, for example). When the first electrode is the negative electrode, the first current collector is a negative electrode current collector (which can be composed of a copper foil or a copper alloy foil), and a negative electrode active material layer (which can contain a carbonaceous material, for example) may be provided as the first active material layer.

The case is formed into a bottomed cylindrical shape having an opening at one end and houses the electrode group. The case may be made of a metal (e.g., aluminum or an aluminum alloy). The outer shape of the case may correspond to the outer shape of the electrode group, or may be, for example, a bottomed cylindrical shape or a bottomed prismatic shape.

The sealing body seals the opening of the case. The sealing body includes a current collector plate electrically connected to the first electrode, and a cap with a disk shape that is overlaid on the outer side of the current collector plate (or on the side opposite the electrode group with respect to the current collector plate) and welded to the current collector plate. The current collector plate and the cap may each be made of a metal (e.g., aluminum or an aluminum alloy). The current collector plate may be connected to the first electrode via a conductive lead or may be directly connected to the first electrode.

The gasket is provided between the opening end portion of the case and the sealing body. The gasket may be made of a resin material having insulating properties. The gasket may electrically insulate the case and the sealing body from each other. The gasket can prevent liquid electrolyte contained in the case from leaking out of the case.

The cap includes a weld portion welded to the current collector plate, and a thick portion that is located on the side toward the opening end portion relative to the weld portion and that is raised outward (i.e., outside the case) to be thicker than the weld portion. The cap is formed with a sufficient thickness to ensure the desired sealing strength. Here, in the battery of the present disclosure, the weld portion is thinner than the thick portion. Accordingly, the welding output (e.g., the laser intensity in laser welding) necessary for welding the cap and the current collector plate can be reduced low, thereby suppressing the occurrence of sputtering. Further, even if sputtering occurs, the thick portion located on the side toward the opening end portion relative to the weld portion serves as a wall, with a result that scattering of sputter onto the gasket can be suppressed.

The weld portion may be formed of a concave portion. The thick portion may be formed of a convex portion provided on the outer peripheral side of the concave portion. Further, the cap may be crimped and fixed to the case via the gasket in a region further outward than the convex portion. In this case, the crimping and fixing can be stably performed, and the above-described advantages of the present disclosure can be obtained.

The concave portion may be formed around the entire circumference of the cap. In this configuration, since the concave portion, which is a welding target region, is present around the entire circumference of the cap, welding via the concave portion as a thin portion can be easily performed by a welding apparatus (e.g., a laser welding apparatus) without performing the angular positioning of the cap.

The concave portion may be formed in a part of the cap in the circumferential direction of the cap. For example, it is possible that concave portions having an angle range of 70° or more and 110° or less are formed at multiple positions of the cap. In this configuration, a decrease in strength of the cap due to provision of concave portions can be suppressed as compared with a case in which a concave portion is formed around the entire circumference of the cap.

The concave portion may have a bottom surface extending in the radial direction of the cap. In this case, since the bottom surface of the concave portion, that is, the thinnest portion of the concave portion can be irradiated with the laser (i.e., because the laser irradiation point is allowed to deviate due to the presence of the bottom surface having a certain range in the radial direction), the cap and the current collector plate can be stably welded by a low-output laser which is less likely to cause sputtering even if the laser irradiation point irradicated by the laser welding apparatus slightly deviates in the radial direction of the cap. The radial dimension of the bottom surface of the concave portion may be 0.8 mm or more and 2.5 mm or less, for example. The bottom surface of the concave portion may be flat.

In the radial direction of the cap, the convex portion may be located closer to the concave portion than to the gasket. Here, the convex portion being located closer to the concave portion than to the gasket means that the radial position of the most convex part of the convex portion is located closer to the latter (the radial center position of the convex portion) than to the intermediate point between the radially inner end of the gasket and the center position of the convex portion in the radial direction. The concave portion and the convex portion may be adjacent to each other, and the outer peripheral wall of the concave portion may coincide with the inner peripheral wall of the convex portion. In this configuration, the convex portion that functions as a wall for suppressing sputter scattering is located near the concave portion that is the welding target portion. Therefore, even if sputtering occurs, the produced sputter can be effectively blocked by the convex portion, and scattering of sputter onto the gasket can be further effectively suppressed.

As described above, according to the present disclosure, provision of the weld portion, which is relatively thin, and the thick portion, which is relatively thick, at the cap, can suppress both the occurrence of sputtering and the scattering of sputter onto the gasket.

Hereinafter, examples of the battery according to the present disclosure will be specifically described with reference to the drawings. The elements of configuration described above are applicable to elements of configuration of the exemplary batteries described below. The elements of configuration of the exemplary batteries described below can be altered based on the above description. Further, the matters described below may be applied to the above-described embodiment. Among the elements of configuration of the exemplary batteries described below, an element of configuration that is not essential to the battery according to the present disclosure may be omitted. It should be noted that the drawings indicated below are schematic and do not accurately reflect the shape or number of actual members.

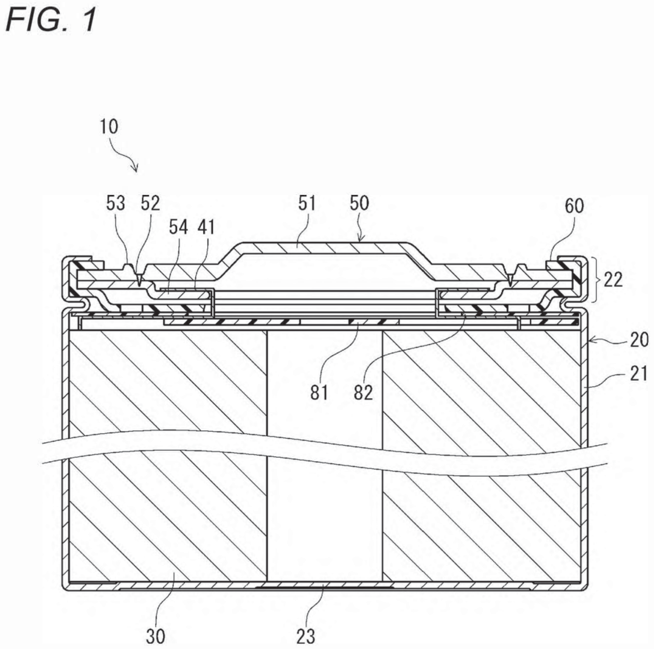

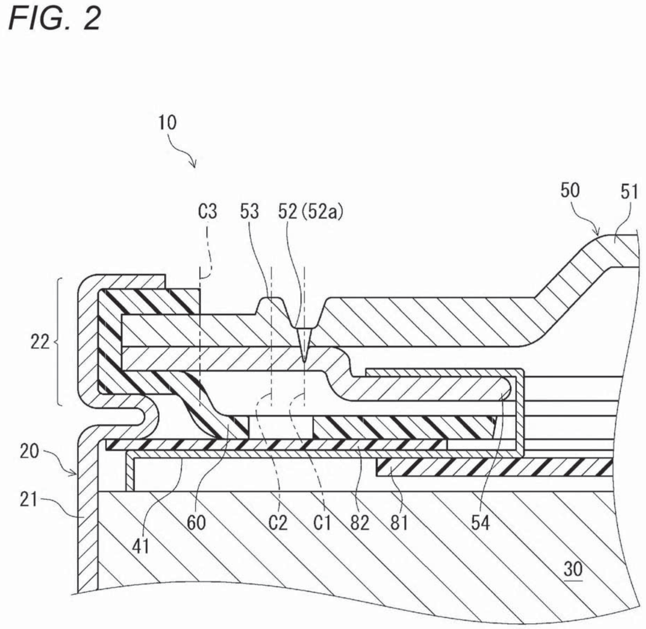

A battery 10 of the present embodiment is configured as a lithium-ion secondary battery but is not limited thereto. As illustrated in FIGS. 1 and 2, the battery 10 includes a case 20, an electrode group 30, a sealing body 50, and a gasket 60.

The case 20 is formed into a bottomed cylindrical shape having an opening at one end (upper end in FIG. 1) and includes a side wall 21 formed into a cylindrical shape and a bottom portion 23 having a disk shape. An opening end portion 22 to which the sealing body 50 is crimped and fixed is formed in a region in the vicinity of the opening of the side wall 21. The case 20 of the present embodiment is made of a metal containing iron as a main component but is not limited thereto.

The electrode group 30 is housed in the case 20 and includes a negative electrode and a positive electrode. The electrode group 30 is a wound electrode group formed by winding the negative electrode and the positive electrode with a separator therebetween. The outer shape of the electrode group 30 is cylindrical. The negative electrode is electrically connected to the bottom portion 23 of the case 20. Accordingly, the case 20 functions as an external negative electrode terminal of the battery 10. The positive electrode is electrically connected to a current collector plate 54 (described later) of the sealing body 50 via a positive electrode lead 41. The negative electrode is an example of the second electrode, and the positive electrode is an example of the first electrode.

The sealing body 50 seals the opening of the case 20. The sealing body 50 includes a current collector plate 54 and a cap 51. The current collector plate 54 is made of metal and is electrically connected to the positive electrode via the positive electrode lead 41. The cap 51 is made of metal, has a disk shape, and is exposed to the outside of the case 20. The cap 51 is overlaid on the outer side of the current collector plate 54 and is welded to the current collector plate 54. Accordingly, the cap 51 is electrically connected to the positive electrode to function as an external positive electrode terminal of the battery 10.

The gasket 60 is provided between the opening end portion 22 of the case 20 and the sealing body 50. The gasket 60 is made of a resin material having insulating properties.

A first insulating plate 81 and a second insulating plate 82 are provided between the electrode group 30 and the sealing body 50. The first insulating plate 81 is located on the side toward the electrode group 30 (lower side in FIG. 1) relative to the second insulating plate 82. The first insulating plate 81 is provided between the electrode group 30 and the positive electrode lead 41 to prevent the contact between the negative electrode of the electrode group 30 and the positive electrode lead 41. The second insulating plate 82 is provided between the case 20 and the positive electrode lead 41 to prevent the contact between the case 20 and the positive electrode lead 41.

The cap 51 includes a weld portion 52 welded to the current collector plate 54, and a thick portion 53 provided on the side toward the opening end portion 22 relative to the weld portion 52 and raised outward to be thicker than the weld portion 52. The weld portion 52 is formed of a concave portion 52. The concave portion 52 in the present embodiment is formed around the entire circumference of the cap 51 but is not limited thereto. For example, the concave portion 52 may be formed in a part of the cap 51 in the circumferential direction of the cap 51. The thick portion 53 is formed of a convex portion 53 provided on the outer peripheral side of the concave portion 52. The outer peripheral wall of the concave portion 52 coincides with the peripheral side wall of the convex portion 53.

The concave portion 52 has a bottom surface 52a extending in the radial direction (the left-right direction in FIG. 2) of the cap 51. The radial dimension (the dimension in the left-right direction in FIG. 2) of the bottom surface 52a may be 1 mm or more and 2 mm or less.

In the radial direction of the cap 51, the convex portion 53 is located closer to the concave portion than to the gasket 60. When the example of FIG. 2 is used for explaining this positional relationship, in the left-right direction of the drawing, the distance between a dash-dot line C1 and a dash-dot C2 is shorter than the distance between the dash-dot line C2 and a dash-dot line C3.

### <<Supplemental Remarks>>

According to the above description of the embodiments, the following techniques are disclosed.

### (Technique 1)

A battery including:
an electrode group including a first electrode and a second electrode;
a case housing the electrode group and having a bottomed cylindrical shape with an opening at one end;
a sealing body sealing the opening; and
a gasket provided between an opening end portion of the case and the sealing body,
wherein the sealing body includes a current collector plate electrically connected to the first electrode, and a cap with a disk shape overlaid on an outer side of the current collector plate and welded to the current collector plate, and
the cap includes a weld portion welded to the current collector plate, and a thick portion that is provided on a side toward the opening end portion relative to the weld portion and that is raised outward to be thicker than the weld portion.

### (Technique 2)

The battery according to Technique 1, wherein the weld portion is formed of a concave portion, and
the thick portion is formed of a convex portion provided on an outer peripheral side of the concave portion.

### (Technique 3)

The battery according to Technique 2, wherein the concave portion is formed around an entire circumference of the cap.

### (Technique 4)

The battery according to Technique 2, wherein the concave portion is formed in a part of the cap in a circumferential direction of the cap.

### (Technique 5)

The battery according to any one of Techniques 2 to 4, wherein the concave portion has a bottom surface extending in a radial direction of the cap.

### (Technique 6)

The battery according to any one of Techniques 2 to 5, wherein in a radial direction of the cap, the convex portion is located closer to the concave portion than to the gasket.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be utilized for batteries.

### [Reference Signs List]

10: battery
20: case
   21: side wall
      22: opening end portion
   23: bottom portion
30: electrode group
41: positive electrode lead
50: sealing body
   51: cap
      52: weld portion, concave portion
         52a: bottom surface
      53: thick portion, convex portion
   54: current collecting plate
60: gasket
81: first insulating plate
82: second insulating plate

## Claims

1. A battery comprising:
an electrode group including a first electrode and a second electrode;
a case housing the electrode group and having a bottomed cylindrical shape with an opening at one end;
a sealing body sealing the opening; and
a gasket provided between an opening end portion of the case and the sealing body,
wherein the sealing body includes a current collector plate electrically connected to the first electrode, and a cap with a disk shape overlaid on an outer side of the current collector plate and welded to the current collector plate, and
the cap includes a weld portion welded to the current collector plate, and a thick portion that is provided on a side toward the opening end portion relative to the weld portion and that is raised outward to be thicker than the weld portion.

2. The battery according to claim 1,
wherein the weld portion is formed of a concave portion, and
the thick portion is formed of a convex portion provided on an outer peripheral side of the concave portion.

3. The battery according to claim 2,
wherein the concave portion is formed around an entire circumference of the cap.

4. The battery according to claim 2,
wherein the concave portion is formed in a part of the cap in a circumferential direction of the cap.

5. The battery according to any one of claims 2 to 4,
wherein the concave portion has a bottom surface extending in a radial direction of the cap.

6. The battery according to any one of claims 2 to 4,
wherein in a radial direction of the cap, the convex portion is located closer to the concave portion than to the gasket.
